(19) Europäisches Patentamt
European Patent Office
Office européen des brevets

(11) **EP 2 011 567 A1**

(12) **EUROPÄISCHE PATENTANMELDUNG**
veröffentlicht nach Art. 153 Abs. 4 EPÜ

(43) Veröffentlichungstag:
07.01.2009  Patentblatt 2009/02

(21) Anmeldenummer: 06747753.9

(22) Anmeldetag: **19.04.2006**

(51) Int Cl.:
**B01J 19/10** (2006.01)

(86) Internationale Anmeldenummer:
**PCT/RU2006/000194**

(87) Internationale Veröffentlichungsnummer:
**WO 2007/120067 (25.10.2007 Gazette 2007/43)**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Obschestvo S Ogranichennoi Otvetstvennostyu "ASTOR-S" Vologda 160019 (RU)**

(72) Erfinder: **SHESTAKOV, Sergei Dmitrievich Vologda 160017 (RU)**

(74) Vertreter: **Jeck, Anton Jeck - Fleck - Herrmann Klingengasse 2 71665 Vaihingen/Enz (DE)**

(54) **KAVITATIONSREAKTOR**

(57)     Die Erfindung gehört zu Einrichtungen zur Erzeugung der Einwirkung auf Flüssigkeiten durch die Energie eines akustischen Kavitationsfelds, das durch elastische Ultraschallfrequenz-Schwingungen der Flüssigkeit derart erzeugt wird, dass ein athermodynamischer Ungleichgewichtszustand in der Flüssigkeit gebildet wird. Dieser Mechanismus zur Energieübertragung auf die Flüssigkeit ist epithermisch und realisiert Abläufe in Flüssigkeiten, die der Physik und Chemie hoher Energien eigen sind. Dies ermöglicht zum Beispiel, in Wasser eine gewisse Energiemenge durch die isothermische Zerstörung der inneren Struktur zu speichern. Dabei wird die Struktur durch die Wasserstoffbindung von individuellen Molekülen gebildet, ohne dass das Wasser erhitzt wird. Es besteht die Möglichkeit, während der Wiedergewinnung des Gleichgewichts des Wassers oder während der Verbindung des Wassers mit anderen Stoffen diese Energie in Form von Hydratationswärme freizusetzen. Der Kavitationsreaktor gemäß der Erfindung weist eine harmonische Schwingungen abgebende Quelle in Form eines gleichfrequenten Resonators auf, in dem die Flüssigkeitsschwingungen elastische, stationäre Schwingungen erzeugen. Dieser Reaktor ist **dadurch gekennzeichnet, dass** die harmonische Schwingungen abgebende Quelle derart ausgebildet ist, dass sie eine fortschreitende Phasenverschiebung der Resonatoren proportional zur Verschiebung der Resonatoren weg von der Reaktormitte ermöglicht. Der Reaktor ist auch **dadurch gekennzeichnet, dass** der Phasenverschiebungswert jedes Resonators gleich dem Verhältnis der Entfernung der Schwingungseinheiten der Resonatoren von der Reaktormitte zur Wellenlänge in der Flüssigkeit ist.

EP 2 011 567 A1

**Beschreibung**

Die Erfindung gehört zu Einrichtungen zur Energieumwandlung des akustischen Kavitationsfeldes, das im Raum sich ausbreitender, elastischer Wellen entsteht, um feste und flüssige Phasen in Flüssigkeiten zu zerstreuen, zu homogenisieren und zu desintegrieren. Dieser Mechanismus der Energiezerstreuung in Flüssigkeiten ist epithermisch und realisiert Abläufe in Flüssigkeiten, die der Physik und Chemie hoher Energien eigen sind. Die Abläufe werden durch die Entstehung von thermodynamischen Ungleichgewichtszuständen begleitet. Das ermöglicht zum Beispiel, in Wasser eine gewisse Energie durch die isothermische Zerstörung der inneren Struktur zu speichern. Dabei wird die Struktur durch die Wasserstoffbindung von Molekülen gebildet. Es besteht die Möglichkeit, während der Verschiebung des Ungleichgewichtszustands oder während der Verbindung des Wassers mit anderen Stoffen diese Energie in Form von Hydratationswärme freizusetzen.

Die Erfindung kann in der Chemie- und Lebensmittelindustrie, in der pharmazeutischen Industrie und der Parfümerieindustrie sowie in der Medizin und der Energetik verwendet werden.

Stand der Technik

Bekannt ist ein Kavitationsreaktor zur Behandlung flüssiger Medien. Der Reaktor stellt eine mit Flüssigkeit behandelte Kammer dar. Der innere Raum der Kammer ist durch die Oberflächen des Gehäuses, durch Strahler elastischer, akustischer Wellen und die Wellen zurückstrahlenden Wände begrenzt. Die Schwingungen aller Strahler, unabhängig von ihrer Anzahl im Reaktor, bilden eine einheitliche akustische Welle. Die inneren Ausmaße des Reaktorgehäuses werden abhängig vom Profil und den Ausmaßen der Wellenfronten ausgewählt (Patent RU 2209112, 04.06.2002). Die Dichteverteilung potentieller Kavitationsenergie in der Flüssigkeit im Reaktor hat ein globales Maximum und lokale Minima. Die inneren Ausmaße des Gehäuses werden, abhängig von der Lage der Wände, im Minimumbereich der potentiellen Energiedichte ausgewählt, um deren erosive Zerstörung und die Verunreinigung der behandelnden Flüssigkeit durch Erosionsprodukte zu verhindern. Der Durchschnittswert der Energiedichte in der Kammer kann durch Veränderung der Strahleroberfläche nicht vergrößert werden, da dies eine Verlagerung der Maxima der Energiedichte verursachen kann und eine Größenänderung des Gehäuses notwendig wird. Die statische Druckerhöhung im Reaktor zu demselben Zweck wird eine Leistungserhöhung der Strahler verursachen.

Es gibt Einrichtungen mit mehreren Strahlern und Rückstrahlern der durch die Strahler erzeugten Wellen. Die Einrichtungen stellen akustische Resonatoren dar (WO 2000/035579, 22.06.2000, Patent US 4618263, 21.10.86). Es fehlen die Anpassungen an die Verhältnisse der Schwingungsphasen, die diese Wellen erzeugen. Deshalb sind in diesen Reaktoren die Wellen nicht gesteuert. Ferner kann die Kavitationsenergiedichte durch Erhöhung des statischen Drucks im Reaktor nach Patent US 4618263, 21.10.1986 nicht erhöht werden, weil der Reaktor ein offenes System darstellt.

Bekannt sind Kavitationsreaktoren zur Wirkung von Kavitationsenergie auf den Flüssigkeitsstrom. Die Kavitationsreaktoren enthalten auch Resonatoren (Patent RU 2226428, 17.04.2003, WO 2005/018801, 03.03.2005). Diese Reaktoren weisen eine Membran quer zur Richtung des Flüssigkeitsstroms auf, wo die Dichte der potentiellen Kavitationsenergie, die von der akustischen Leistung der Resonatoren abhängig ist, in einem bestimmten Bereich liegt. Die Art der Verteilung der Energiedichte wird im Reaktor (Patent RU 2226428) mittels der Verteilung des Erosionskoeffizienten und im Reaktor (WO 2005/018801) unmittelbar bestimmt. Es besteht die Möglichkeit, in diesen Reaktoren den absoluten Wert der potentiellen Energiedichte im Reaktor durch die Flächenvergrößerung der Strahler und/oder des hydrostatischen Drucks in Betriebskammern zu erhöhen. Dabei soll aber die Leistung der Strahler erhöht werden.

Der Kavitationsreaktor (Patent RU 2228217, 21.05.2003) für die Behandlung flüssiger Medien, der eine geschlossene, mit der behandelten Flüssigkeit gefüllte Kammer darstellt, kommt der Einrichtung gemäß der Erfindung am nächsten. Der Reaktor kann über mehrere Strahler verfügen. Zusammen mit speziell ausgerüsteten Wänden, die die schwingungserzeugenden, elastischen Wellen in der Flüssigkeit spiegeln und mit der Flüssigkeit selbst stellen sie akustische Resonatoren dar, wobei sich eine stehende Welle bildet. Die angegebene Dichteverteilung potentieller Energie im Reaktor mit dem angegebenen Durchschnittswert wird durch die Zusammenstellung des Dispersionswerts dieser Verteilung, bezogen auf den Durchschnittswert, durch die Veränderung der Leistung und der Fläche der Strahler und Ausmaße der Kammer ermittelt. Das bedeutet, der Wert der potentiellen Energiedichte im Inneren des Reaktors kann durch die Veränderung der Größen der Resonatoren, durch die Veränderung der Fläche der Strahler und rückstrahlenden Wände im angegebenen Bereich der Dispersion ihrer Verteilung im Raum sowie durch die Erhöhung des hydrostatischen Drucks im Reaktor verändert werden.

Dieser Reaktor wird als Prototyp betrachtet.

Der Prototyp weist folgende Mängel auf:

1. Für die Erhöhung des absoluten Werts der potentiellen Energiedichte im Inneren des Reaktors gemäß beider Verfahren soll die Leistung der Strahler dementsprechend verändert werden.

2. Die Schwingungsphasen in separaten Resonatoren können nicht verändert werden, weil der notwendige Dispersionswert abhängig von der Wirkung einer oder mehrerer Wellen mit gleichen Schwingungsphasen bestimmt wird.

Die Aufgabe der Erfindung besteht in Folgendem:

Bekannt ist, dass im Raum der elastischen Wellen Kavitation in Form von so genannten stationären Kavitationsbereichen entsteht. Die Kavitationsbereiche bestehen aus einzelnen Kavitationsblasen und befinden sich in Schwingungsknoten. Die Druckstörung geht von jeder Kavitationsblase aus. Das Profil der Druckstörung hängt mit der Veränderung des Modulwerts und der Richtung des Geschwindigkeitsvektors seiner Schwebung zusammen. Unabhängig vom Profil der Kavitationsblase soll die durchschnittliche, in der Zeit der harmonischen Welle vorhandene Verbreitungsgeschwindigkeit dieser Störung im Durchschnitt im Kavitationsbereich der Schallgeschwindigkeit der Flüssigkeit gleich sein. Im gegensätzlichen Fall wird das Gesetz der Erhaltung des Druckimpulses verletzt. Deshalb kann angenommen werden, dass die Druckstörungen von den Kavitationsblasen in der Periode der harmonischen Welle im Durchschnitt in der Flüssigkeit die Entfernung, die der Länge dieser Welle in dieser Flüssigkeit gleich ist, zurücklegen werden. Die Phasen dieser Störungen von den in Kavitationsbereichen verteilten Kavitationsblasen werden nicht in jedem Punkt des Raums zusammenfallen, weil es die Konstante der Verteilungsgeschwindigkeit der elastischen Störungen in der Flüssigkeit gibt. Das führt zu der bekannten Erscheinung einer gegenseitigen Dämpfung der Druckstörungen nach deren Interferenz und ermöglicht es nicht, diese Druckstörungen zu verstärken. Die Druckstörungen verbreiten sich von einzelnen Blasen dadurch, dass sie die einzelnen Verdünnungen oder Kompressionen in einem beliebigen Punkt in der Kavitationsflüssigkeit aufeinander legen, ohne die Pulsationsphasen jeder einzelnen Blase regeln zu können. Es ist klar, dass diese Steuerung technisch nicht machbar ist, aber die Phasen der einzelnen Wellen können gesteuert werden. Die Wellen haben in Schwingungsknoten Kavitationsbereiche. Die Kavitationsbereiche bestehen aus einer endlichen Zahl von Blasen. Das bedeutet, dass die Interferenz des akustischen Kavitationsfeldes in Phasen gesteuert werden kann. Die Interferenz wird von der Gesamtheit der flachen elastischen Wellen erzeugt, die sich parallel und unabhängig voneinander in einer Flüssigkeit ausbreiten. Die Wellen verbreiten sich, wobei sie sich mit den gleichen Vorzeichen addieren, d.h. sie verstärken die Störungen des Kavitationsdrucks.

Die technische Lösung besteht darin, den maximalen Wert der Dichte der potentiellen Kavitationsenergie zu erhöhen. Das erfolgt dadurch, dass die Energie im Inneren des Reaktors in einem konstanten Volumen des Reaktors verteilt wird, unabhängig vom hydrostatischen Druck im Reaktor und ohne eine entsprechende Veränderung der Raumdichte der akustischen Leistung, wobei diese Energie die Kavitation der harmonischen Wellen erzeugt.

Das genannte technische Ergebnis bei der Ausführung der Erfindung wird dadurch erreicht, dass im bekannten Kavitationsreaktor zur Behandlung flüssiger Medien, der eine Quelle der harmonischen Schwingungen in Form von Resonatoren mit der gleichen Frequenz hat, die die stehenden Wellen in der Flüssigkeit erzeugen, die Quelle der harmonischen Schwingungen so ausgebildet ist, dass die Phasen der Resonatoren für die Überholung während der Entfernung der Resonatoren von der Mitte des Reaktors verschoben werden können.

Ein Unterschied besteht noch darin, dass die Phasenverschiebung jedes Resonators dem Verhältnis der Entfernung von den Schwingungsknoten des Resonators bis zur Mitte des Reaktors zur Wellenlänge in der Flüssigkeit gleich ist. In diesem Fall werden die Druckimpulse, welche von den Kavitationsbereichen erzeugt werden, die von jeder elastischen Welle gebildet werden, je näher sie in der Mitte des Reaktors sind, das gleiche Vorzeichen und den maximal möglichen absoluten Wert aufweisen. Dies wird zur Erhöhung der potentiellen Energiedichte führen. Bekannt ist, dass in diesem Fall dieser Wert dem Quadrat der Summenstörung des Drucks aller Kavitationsbereiche aller Resonatoren proportional ist. Also wird auch die Intensität der Kavitationswirkung auf den Flüssigkeitsstrom maximal sein. Die Ausmaße des Reaktors und die Wandfläche der Resonatoren bleiben dabei konstant, und die Leistung der Strahler wird nicht erhöht.

Die Erfindung wird nun anhand von Ausführungsbeispielen näher erläutert. Es zeigen:

Fig. 1 einen Schnitt entlang der Diametralebene des Gehäuses eines runden (auf der Zeichnung) Kavitationsreaktors mit drei akustischen Resonatoren, von denen jeder aus zwei Festkörperhohlleitern besteht, wobei die Schwingungsknoten in der Flüssigkeit, die im Schnitt seitlich zu sehen sind, mit einer gepunkteten Linie dargestellt sind und mit Null ein Punkt dargestellt ist, der die Mitte des Reaktors bildet, und

Fig. 2 einen Schnitt des Reaktors längs der Linie A-A in Fig. 1 in der Ebene, in der die Schwingungsknoten liegen, wobei die Sicht auf die Wellenleiter der Resonatoren in der Zeichnung mit den Projektionen der Schwingungsknoten zusammenfällt,

Fig. 3 einen Schnitt durch einen der Fig. 1 ähnlichen Reaktor mit sieben Resonatoren,

Fig. 4 einen Schnitt durch einen der Fig. 1 ähnlichen Reaktor mit einem Resonator,

Fig. 5      einen Schnitt entlang der Diametralebene des Gehäuses eines rechteckigen (auf der Zeichnung) Kavitationsreaktors mit vier akustischen Resonatoren, von denen jeder aus zwei Festkörperwellenleitern besteht, und

Fig. 6      einen Schnitt längs der Linie A-A in Fig. 5.

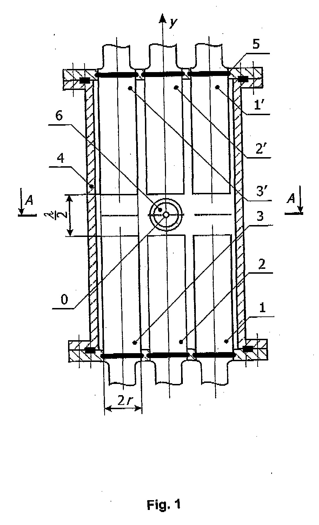

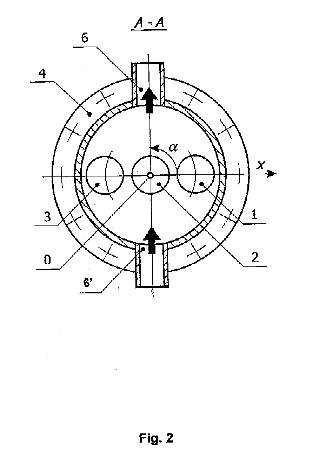

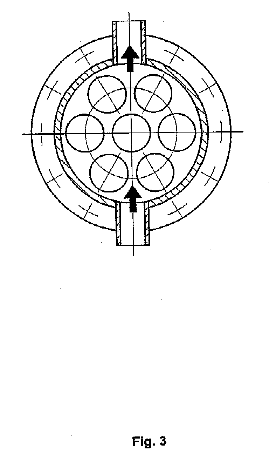

In Fig. 1 ist der Schnitt der Ebene dargestellt, in der die Schwingungsknoten liegen. Eine Ausführung nach Fig. 3 gleicht dem Schnitt in Fig. 2, ist aber mit sieben akustischen Resonatoren versehen.

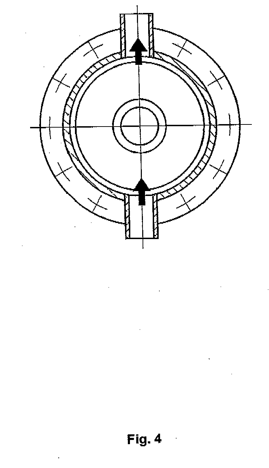

Eine weitere Ausführung nach Fig. 4 gleicht dem Schnitt in Fig. 2, ist aber mit zwei akustischen Resonatoren versehen. Der eine Resonator, der in der Symmetrieachse liegt, hat dieselbe Form und dieselben Ausmaße wie der Resonator 2 in den Figuren 1 und 2, und die Wellenleiter sind in Form von Rohren ausgeführt. Die Rohre ummanteln die Wellenleiter des ersten Resonators mit einem Spalt, und die Stärke der Wände ist gleich dem Durchmesser.

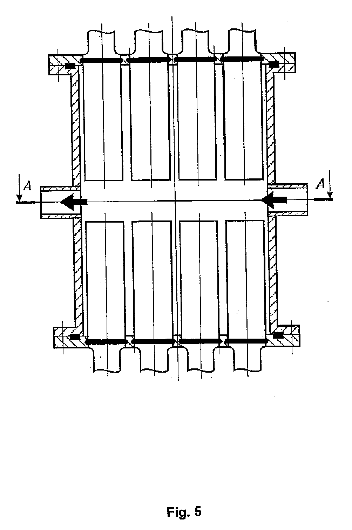

In Fig. 5 ist der Schnitt entlang der Diametralebene des Gehäuses eines rechteckigen (auf der Zeichnung) Kavitationsreaktors mit vier akustischen Resonatoren dargestellt, von denen jeder aus zwei Festkörperwellenleitern besteht.

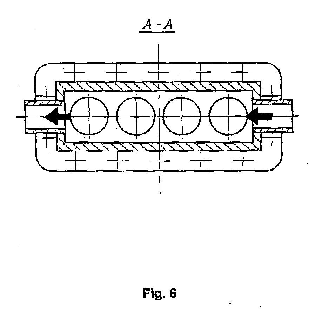

In Fig. 6 ist der Schnitt des Reaktors in Fig. 5 in der Ebene dargestellt, in der die Schwingungsknoten liegen.

Variante der Ausführung der Erfindung

Der angemeldete Kavitationsreaktor, der beispielsweise in den Figuren 1 und 2 dargestellt ist, weist drei akustische Resonatoren auf. Jeder Resonator besteht aus zwei Festkörperwellenleitern 1, 1', 2, 2' und 3, 3', die einander gegenüberliegen. Diese werden mittels elektroakustischer Umwandler (nicht gezeigt) folgendermaßen angetrieben. Die elektrische Energie wird in mechanische Schwingungsenergie umgewandelt, und diese Schwingungen werden mit Hilfe der Wellenleiter in die Flüssigkeit übertragen. Die Entfernung zwischen den Oberflächen der Wellenleiter in den Resonatoren ist, wie beispielsweise in Fig. 1 gezeigt, der Hälfte der Länge der elastischen Welle in der behandelten Flüssigkeit gleich. Ein oder beide Wellenleiter, die den Resonator bilden, können mit dem Umwandler verbunden werden. In diesem Fall wird der Wellenleiter "aktive Wand" genannt. Im ersten Fall wird die Bedingung der Resonanzeinstellung in der Flüssigkeit zwischen den Wellenleitern gewährleistet, weil der zweite Wellenleiter (passive Wand) mit der Frequenz des ersten Wellenleiter schwingt. Im zweiten Fall soll die Resonanz durch die Einstellung der gleichen Frequenz der Schwingungen von Umwandlern sichergestellt werden. Dies kann verwirklicht werden, wenn sie von einer Quelle eingespeist werden, die von einem Frequenzregler gesteuert wird. Da die Resonatoren 1-1' und 3-3' von der Mitte des Reaktors gleich weit entfernt sind, sollen die Schwingungsphasen gleich sein. Deshalb können die Umwandler, die die Wellenleiter 1,1', 3 und 3' antreiben, von einem Frequenzgenerator gesteuert werden. So steuern zwei Frequenzgeneratoren die Resonatoren des Reaktors. Der erste Frequenzgenerator steuert mit Hilfe der Umwandler, die die Wellenleiter 2 und 2' antreiben, und der zweite Frequenzgenerator steuert mit Hilfe der Wellenleiter 1, 1', 3 und 3'. Für die Regelung der Schwingungsphase können Einrichtungen verwendet werden, die beispielsweise im US-Patent 4 556 467, 03.12.1985 beschrieben sind.

Die Wellenleiter im Reaktor und die Schwingungsknoten der Flüssigkeit dazwischen haben in der Zeichnung eine runde Form mit einem Radius r. Der Radius beträgt ein Viertel der Welle im Resonator. Die Wellenleiter sind im Gehäuse des Reaktors 4 mit Hilfe von elastischen Dichtungen 5 befestigt. Die Dichtungen sorgen für die Dichtheit des Gehäuses. Diese Befestigung ist auf bekannte Weise in Knoten eigener Schwingungen der Wellenleiter so ausgeführt, dass mit Hilfe der gebildeten Resonatoren die akustischen Wellen mit unterschiedlichen, voneinander unabhängigen Phasen ohne Zerstreuung der Schwingungen durch das Gehäuse eingestellt werden können. Die zu behandelnde Flüssigkeit wird durch den Reaktor mit Hilfe der Stutzen 6 und 6' durchgelassen. Der Punkt 0 ist die Mitte des Reaktors.

Die Parameter des Reaktors werden folgendermaßen berechnet.

Es wird angenommen, dass die behandelte Flüssigkeit Wasser ist. Der Schall verbreitet sich im Wasser mit der Geschwindigkeit von $1450\,m/s$, und die Frequenz der Schwingungen der Umwandler beträgt $20\,kHz$. Dann beträgt die Wellenlänge dieser Schwingungen im Wasser $\lambda = 1450 : 20 = 72{,}5mm$. Der Durchmesser der Wellenleiter und Schwingungsknoten in der Flüssigkeit beträgt $0{,}5\lambda = 36{,}3mm$, und der Spalt zwischen den Wellenleitern wird $3{,}6mm$ betragen.

Die durchschnittliche Entfernung von einem beliebigen Punkt des Raums bis zu allen Punkten des Kreises, der in einer Ebene liegt, ist, wie allgemein bekannt, gleich:

$$\frac{1}{\pi r^2}\iint\limits_{(\pi r^2)} r\sqrt{r^2 + x^2 - 2xr\cos\alpha}\,\mathrm{d}\alpha\,\mathrm{d}r\,,$$

wobei x die Entfernung zwischen diesem Punkt und dem Mittelpunkt des Kreises mit dem Radius $r$ ist.

Wenn dieses Doppelintegral und die Tatsache verwendet werden, dass die Entfernungen zwischen den beiden geometrischen Mittelpunkten der Resonatoren 1-1', 3-3' und dem Mittelpunkt des Reaktors gleich sind und 36,3 + 3,6 = 39,9mm betragen, kann die Entfernung von diesem Mittelpunkt bis zum Schwingungsknoten, der dem Resonator 2-2' gehört, und bis zu den Knoten, die den Resonatoren 1-1' und 3-3' gehören, berechnet werden. Die Entfernung beträgt 12,1 *mm* bzw. 41,0 *mm*. So sollen die Schwingungsphasen der Resonatoren 1-1', 3-3' und 2-2' in Bezug auf den Nullpunkt der Phasen auf Überholung verstellt sein. Der Wert der Phasenverschiebung soll 41,0 : 72,5 = 0,566 und 12,1 : 72,5 = 0,167 der Wellenperiode betragen. D.h. die Wellen in den Resonatoren 1-1' und 3-3' sollen zu jedem Zeitpunkt die Wellenphase im Resonator 2-2' um den Wert von 0,566 - 0,167 = 0,399 der Wellenperiode überholen. Da die Periode der Welle $10^6$ : 20000 = 50 $\mu$s beträgt, wird die Wellenverschiebung für Überholung in peripheren Resonatoren in Bezug auf den zentralen Resonator in absoluten Einheiten 50 0,399 = 20 $\mu$s betragen.

Der Reaktor in den Figuren 1 und 2 arbeitet folgendermaßen.

Wenn die elektroakustischen Umwandler angetrieben werden, entstehen elastische, stehende Halbwellen in jedem Resonator, wobei die Phasen in den peripheren Resonatoren 1-1' und 3-3' die Phase im Resonator 2-2', der sich im Mittelpunkt befindet, um 20 Mikrosekunden überholen. Deshalb gelangen die Druckstörungen, die durch die Kavitationsbereiche im Reaktor erzeugt werden, in den Mittelpunkt seines Inneren in gleicher Phase. Je weiter sie sich vom Mittelpunkt zur Peripherie entfernen, werden sie mit der minimalen Phasendifferenz zusammen addiert. Das heißt, die Erscheinung der Interferenz zeigt sich nicht in der gleichzeitigen Dämpfung der akustischen Wellen, die von den einzelnen Kavitationsbereichen erzeugt werden, sondern in ihrer gegenseitigen Verstärkung. Deshalb wird der Gesamtmomentwert des Drucks in der Mitte des Reaktors zu jedem Zeitpunkt nach dem absoluten Wert immer maximal sein. Also wird auch die Dichte der potentiellen Energie, die dem Quadrat des Drucks proportional ist, auch maximal sein. Dafür sollen die Fläche der Ausstrahlung der Wellen, der statische Druck in der Flüssigkeit und somit die Leistung der Strahler nicht erhöht werden. Die Flüssigkeit, die im Reaktor vorhanden ist, wird intensiver der Kavitationswirkung unterzogen.

Wenn eine bekannte Gesetzmäßigkeit der Verteilung der Dichte der potentiellen Energie der Mehrblasenkavitation in Bezug auf die sie erzeugende harmonische Welle verwendet wird, kann das oben beschriebene Beispiel einer konkreten Ausführung der Erfindung mit einem Prototyp verglichen werden. Der Prototyp weist den gleichen Aufbau und die gleichen Ausmaße des Reaktors, aber keine Verschiebung der Schwingungen der Resonatoren auf. Gemäß dieser Gesetzmäßigkeit ist die durchschnittliche Dichte im Innenraum des Reaktors der potentiellen Kavitationsenergie im Reaktor gemäß der Erfindung um das 3,2-fache größer als beim Prototyp.

Der Reaktor kann eine beliebige Anzahl von Resonatoren aufweisen. Die Resonatoren können frei aufgestellt sein. Als Beispiel ist in den Figuren 5, 6 ein rechteckiger Reaktor mit einem Gehäuse und Resonatoren 1-1', 2-2', 3-3' und 4-4' dargestellt. Die Umwandler sind auf den wellenleitenden Transformatoren befestigt. Die Transformatoren werden von Umwandlern angetrieben und am Gehäuse in Knoten eigener Schwingungen befestigt. Das ermöglicht es, die Wellenphase in jedem Resonator frei einzustellen ohne das Risiko, die Konstruktion des Reaktors zu zerstören.

Um praktisch die Möglichkeit der Ausführung der angemeldeten Erfindung zu bestätigen und mittels der Erfindung das technische Ergebnis zu erreichen, wurde ein Experiment durchgeführt. Als Strahler in den Resonatoren wurden die Strahler der Geräte für Kavitationsdesintegration der flüssigen Nahrungsmedien des Typs "SIRINX" SITB. 443146.002TU mit elektroakustischen, magnetostriktiven Umwandlern mit der Frequenz von 22 kHz verwendet. Das Experiment wurde nach der Methodik der Untersuchung des Einflusses der Intensität der Kavitationswirkung auf den Grad des Zerfalls der Elektrolyte mit einer Ionenbindung durchgeführt. Die Methodik wurde im Werk von Dr. habil. techn. Rogow und Dr. habil. techn. Schestakow im Artikel "Ephithermische Veränderung des thermodynamischen Gleichgewichts des Wassers und der Wasserlösungen" beschrieben. Das Werk wurde in der theoretischen Zeitschrift RASChN "Lagerung und Überarbeitung der Agrarrohstoffe", Ausgabe Nr.10 2004, veröffentlicht.

Drei Halbwellenresonatoren, die aus Festkörperwellenleitern der Laborgeräte "SIRINX" mit einem Durchmesser von 38mm und elastischen Rückstrahlern aus Vakuumgummi bestehen, wurden auf einer Geraden in einem offenen Rundgefäß (des Reaktors) aufgestellt. Die Entfernung zwischen den Achsen der Wellenleiter beträgt 74mm. Das Rundgefäß ist mit 1400 *ml* der durchströmenden Flüssigkeit gefüllt. Die Verschiebung der Phasen der magnetostriktiven Umwandler der peripheren Resonatoren bezüglich des zentralen Resonators wird mit Hilfe einer Verzögerungsleitung verwirklicht. Die Verzögerungsleitung ist gemäß den Schemen von steuerbaren Einvibratoren ausgeführt. Die Verschiebung der Phasen auf Überholung zwischen den Schwingungen in den Resonatoren betrug 43 $\mu$s, bei der Nachbildung der Funktion des Prototyps 0 $\mu$s. Die elektrische Leistung, die durch die Umwandler der "SIRINX"-Geräte aufgenommen wurde, blieb konstant. Der statische Druck im Reaktor, der ein offenes Gefäß darstellt, blieb auch konstant und war dem Atmosphärendruck gleich. Die Umlufttemperatur betrug +20°C und blieb so mit einer Toleranz von ±1°C.

Eine zentinormale Natriumchlorid-Lösung wurde durch den Reaktor in die Richtung, die zur Achse der Aufstellung der Resonatoren senkrecht steht, mit einer Geschwindigkeit von 500±10 *ml/min* mittels einer Laborpumpe und Regeldrossel durchgeleitet.

Nach dem Resonator, der sich im Mittelpunkt des Reaktors befindet, wurde mit (in?) der Strömungsrichtung der Elektrolytenlösung ein konduktometrischer Sensor des Geräts "Anion 7051" (INFRASPAK, Nowosibirsk) aufgestellt. In diesem Betriebsmodus der Versuchseinrichtung wurden in jeder der Varianten der Phasenverschiebung folgende statistische Werte des Geräts gesammelt. Der Versuch wurde fünfmal wiederholt.

| GEMESSENER PARAMETER Maßeinheit | PHASENVERSCHIE BUNG AUS (Prototyp) | PHASENVERSCHIE BUNG EIN (Erfindung) |
|---|---|---|
| Elektrische Leitfähigkeit mS/cm | 1,26 $\pm$0,04 | 1,35 $\pm$0,03 |

Es ist aus der Tabelle ersichtlich, dass der Grad des Zerfalls des Natriumchlorids in Ionen im zweiten Fall höher ist. Der Grad des Zerfalls bestimmt die Leitfähigkeit der Lösung. Das beweist eine bessere Kavitationswirkung auf die Lösung, wobei es praktisch zu einem hundertprozentigen Zerfall von NaCl kommt.

**Patentansprüche**

1.  Kavitationsreaktor zur Behandlung von flüssigen Medien, der eine Quelle von harmonischen Schwingungen in Form von Resonatoren mit der gleichen Frequenz aufweist, die stehende Wellen in der Flüssigkeit erzeugen,
    **dadurch gekennzeichnet,**
    **dass** die Quelle der harmonischen Schwingungen so ausgeführt ist, dass die Phasen der Resonatoren für die Überholung während der Entfernung der Resonatoren von der Mitte des Reaktors verschoben werden können.

2.  Kavitationsreaktor nach Anspruch 1,
    **dadurch gekennzeichnet,**
    **dass** der Wert der Phasenverschiebung jedes Resonators dem Verhältnis der Entfernung von den Schwingungsknoten des Resonators bis zur Mitte des Reaktors zur Wellenlänge in der Flüssigkeit gleich ist.

Fig. 1

Fig. 2

Fig. 3

Fig. 4

Fig. 5

*A - A*

Fig. 6

## INTERNATIONAL SEARCH REPORT

| | International application No. |
|---|---|
| | PCT/RU 2006/000194 |

**A. CLASSIFICATION OF SUBJECT MATTER**

*B01J 19/10 (2006.01)*
*B01F 11/02 (2006.01)*

According to International Patent Classification (IPC) or to both national classification and IPC

**B. FIELDS SEARCHED**

Minimum documentation searched (classification system followed by classification symbols)

B01F 3/00-11/02, B01J 19/10

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | RU 2228217 C1 (SHESTAKOV SERGEY DMITRIEVICH) 10.05.2004, the claims | 1-2 |
| A | RU 2151165 C1 (KAMALOV RUSTEM NAIFOVICH et al.) 20.06.2000, the abstract | 1-2 |
| A | US 4556467 A (MINERAL SEPARATION CORPORATION) 03.12.1985, the abstract | 1-2 |

☐ Further documents are listed in the continuation of Box C.      ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 December 2006 (05.12.2006) | 28 December 2006 (28.12.2006) |

| Name and mailing address of the ISA/ | Authorized officer |
|---|---|
| | |
| Facsimile No. | Telephone No. |

Form PCT/ISA/210 (second sheet) (July 1998)

**EP 2 011 567 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- RU 2209112
- WO 2000035579 A
- US 4618263 A
- RU 2226428
- WO 2005018801 A
- RU 2228217
- US 4556467 A